Europäisches Patentamt

European Patent Office

Office européen des brevets

(19)

(11) **EP 1 351 886 B1**

(12) **EUROPEAN PATENT SPECIFICATION**

(45) Date of publication and mention
of the grant of the patent:
**02.08.2006 Bulletin 2006/31**

(51) Int Cl.:
***C01F 7/47*** *(2006.01)*     ***C01F 7/06*** *(2006.01)*

(21) Application number: **01271901.9**

(22) Date of filing: **21.12.2001**

(86) International application number:
**PCT/AU2001/001649**

(87) International publication number:
**WO 2002/051753 (04.07.2002 Gazette 2002/27)**

(54) **PROCESS FOR REMOVING CONTAMINANTS FROM BAYER LIQUORS**

VERFAHREN ZUR ABTRENNUNG VON VERUNREINIGUNGEN AUS BAYER-LAUGEN

PROCEDE D'EVACUATION DE CONTAMINANTS DE LA LIQUEUR BAYER

(84) Designated Contracting States:
**AT BE CH CY DE DK ES FI FR GB GR IE IT LI LU MC NL PT SE TR**

(30) Priority: **22.12.2000 AU PR226000**

(43) Date of publication of application:
**15.10.2003 Bulletin 2003/42**

(73) Proprietors:
- **Queensland Alumina Limited
  Gladstone, QLD 4680 (AU)**
- **THE UNIVERSITY OF NEW SOUTH WALES
  Kensington, NSW 2052 (AU)**

(72) Inventors:
- **Armstrong, Lyndon George
  Gladstone, QLD 4680 (AU)**
- **Fane, Anthony,
  The University of New South Wales
  Kensington, NSW 2052 (AU)**
- **Glastras, Mary,
  The University of New South Wales
  Kensington, NSW 2052 (AU)**

(74) Representative: **Ward, David Ian
Marks & Clerk,
Alpha Tower,
Suffolk Street,
Queensway
Birmingham B1 1TT (GB)**

(56) References cited:
**US-A- 4 676 959**      **US-A- 4 678 477**
**US-A- 4 786 482**

**Description**

<u>TECHNICAL FIELD</u>

The present invention relates to a process for removing contaminants from a Bayer process stream and, more particularly, to a nano-filtration process for removing organic contaminants from a Bayer process stream.

<u>BACKGROUND</u>

The Bayer process was first developed in 1888 and presently accounts for over 90% of the world's alumina production. The process utilises a digestion solution at elevated temperature to digest aluminium hydroxides or oxy-hydroxides (termed "alumina" in this context) from bauxite or other aluminium containing ores. The digestion solution is typically caustic soda but other caustic solutions in which alumina can be dissolved may be used. For example, the digestion solution may be potassium hydroxide or ammonium hydroxide.

To digest the alumina ore, the caustic solution is typically at a temperature in the range of 150 - 280°C, with the temperature used being largely dependent upon the nature of the alumina ore. Typically, an alumina rich liquor phase is separated from undissolved impurities by settling and alumina is recovered from the liquor phase by precipitation of aluminium hydroxide (typically gibbsite) crystals. The aluminium hydroxide crystals are calcined to produce aluminium oxide.

The undissolved impurities resulting from digestion of the bauxite with caustic soda at elevated temperature is commonly referred to as red mud and typically comprises inert iron oxides, titanium oxides and silica compounds. Prior to discharge from the process, the red mud is typically washed with water to recover entrained caustic soda in solution.

Organic material enters the Bayer process from a variety of sources with the bauxite ore typically accounting for the majority of the total organic carbon of Bayer liquors. Organic contaminants may also be introduced into Bayer processes from other raw materials used in Bayer processes, such as defoaming agents, flocculants and caustic soda. On digestion in the Bayer process typically over 50% of the organic carbon and sometimes to over 90% is extracted into the liquor and its concentration gradually builds up to an equilibrium level, (dependant on organic losses from the process) with recycling of the liquor.

The presence of organic contaminants typically causes problems in the precipitation stage resulting in lower yields of acceptable quality alumina, colouring of the liquor, lowering of red mud settling rates, and consumption and lower availability of caustic.

Various techniques have been proposed for removing organic contaminants from Bayer process liquors but very few techniques have found commercial acceptance.

US Patent No. 4280987 relates to the so-called "liquor burning" technique. Other techniques for removing organic contaminants include a Wet Oxidation process with pressurised oxygen (JP 30548/1970), a Wet Oxidation process with manganese or copper based catalysts (WO 85/05095, AU 200017606, AU 200171796), an ultraviolet irradiation method (JP 20097/1974), an adsorption method (US 5093092/AU86730/91), a bio-degradation method for oxalate and associated organics (US 5271844), a cooling method (US 3508884), a magnesium hydroxide co-precipitation method (UK 1520352, JP 130692/1976), a causticising method (US 3120996 and US 3341286), a sodium oxalate removing method (US 3649185, US 3372985, US 3899571, JP 11480/1973, JP 398/1978 and JP 400/1978), and a bauxite burning method (JP 21395/1972).

The liquor burning technique of US 4280987 has found limited commercial acceptance due to the significant cost of energy required to evaporate liquor and calcine the resulting residue. Its use has also been dogged by environmental emission issues particularly with odour and alkaline dusts to the surrounding populations.

A recent development has combined the processes of liquor burning and wet oxidation (WO 00/10918) which teaches that a weakness of each process is overcome by utilising a strength of the other process.

A number of membrane based techniques have also been proposed for removal of organic contaminants in Bayer processes.

US 4676959 and 4786482 teach removal of colour producing humate material from a Bayer solution by passing the solution through a semi-permeable membrane. US 4678477 teaches purification of a Bayer solution by contacting the solution under pressure with the outside of a plurality of porous hollow fibres coated with a semi-permeable membrane, preferably polysulfone fibers coated with a sulfonated polysulfone membrane, with removal of organic sodium salts, humates and sodium oxalate. The membranes taught by US 4676959, 4678477, and 4786482 are relatively loose, high molecular weight cut-off, polysulfone membranes.

WO 88/07975, AU 15433/88, EP 310553 and EP 310554 teach removal of Bayer organics via ion exchange and dialysis using at least one anion perm-selective membrane, at least one cation perm-selective membrane and at least one bi-polar water-dissociating membrane. This is claimed to purify Bayer process streams by recovery of sodium hydroxide from sodium carbonate, oxalate, chloride, sulfate, fluoride, etc thereby removing impurities and organics for disposal and returning purified permeate to the process. Seed wash liquor and washer streams are mentioned as suitable feed streams.

AU 16258/95, WO 95/27681 relates to the use of nano-filtration membranes in reclaiming caustic from dilute alkaline cleaning effluents containing 2-5% caustic (for example from the food, biotechnological and pharmaceutical industries) with recovery of chelating agents (eg EDTA, NTA, etc).

To date, no membrane based technique has found commercial acceptance in a Bayer process to remove liquor organics or other impurities and to thereby improve liquor purity and productivity.

Bayer process streams have complex compositions and caustic strengths ranging from low (eg. 5 g/L free caustic) to high (eg. in excess of 150 g/L free caustic). It is well accepted in the industry literature that the types and molecular weight or size of organics present in a Bayer plant liquor will depend mainly on the type of bauxite feed and the digestion conditions, particularly whether it is a low temperature plant (eg. 140-170°C) or high temperature Bayer digestion plant (eg. 230-280°C).

Recently, organic characterisation work has been performed on both a low temperature Bayer plant liquor [M.A. Wilson, A.V. Ellis, G.S.H.Lee, H.R.Rose, X.Lu & B.R.Young, *Industrial & Engineering Chemistry Research,* 38 (12) 1999, pp4663-4674] and a high temperature plant liquor [D.E.Smeulders, M.A. Wilson, H. Patney and L.Armstrong, *Industrial & Engineering Chemistry research,* 39 (10) 2000, pp3631-3639]. These studies separated plant organics generally according to molecular size in solution into several fractions ranging from <1200 molecular weight (Daltons) to >300,000 Daltons. Most of the Bayer plant organic material was <1200 Daltons in molecular weight, 75% in the low digest temperature case, and >87% in the high temperature case, notwithstanding that different bauxites are processed in each case.

Further unpublished studies [L. Armstrong, V. Mitchell, K. Adams, D.E. Smeulders and M.A. Wilson "Impact of organic fractions from Weipa high temperature digest on gibbsite and oxalate precipitation", Sixth International Alumina Quality Workshop, submitted for publication, 2001] indicate that a major amount of the organic compounds in a high temperature Bayer plant processing bauxite from Weipa in Australia is <250 molecular weight.

Throughout this specific the below listed nomenclature will be utilised.

"Free caustic" (fc) denotes caustic present as sodium hydroxide in solution (expressed in g/L as $Na_2CO_3$ equivalent).

"Caustic" (C) denotes caustic present as sodium hydroxide (ie "free caustic") plus sodium aluminate (mostly $NaAl(OH)_4$) also expressed in g/L as $Na_2CO_3$ equivalent.

"Pure caustic solutions" contain just sodium hydroxide, ie just "free caustic".

"Caustic aluminate liquors" contain sodium hydroxide and sodium aluminate and possibly other impurities such as carbonate. Aluminium concentration for these liquors is expressed as g/L $Al_2O_3$ equivalent.

"Soda" as S is the sum of caustic and sodium carbonate, expressed as g/L $Na_2CO_3$.

"Total Organic Carbon" (TOC) of process streams is expressed as carbon, in reality present as sodium salts of a range of molecular weight organic compounds.

"Non Oxalate Organic Carbon" (NOOC) is organic carbon other than sodium oxalate.

"Nano-filtration membrane" is defined as a membrane having a molecular weight cut-off (MWCO) range of 100 - 1000 Daltons for uncharged organic molecules, as is the usual membrane industry convention.

"Permeate" is defined as the solution which is forced under flow pressure through the nano-filtration membrane and has a resulting composition according to the membrane's MWCO, the size of ions in solution, and other operating factors and membrane characteristics.

"Retentate" or "Concentrate" is defined as the solution which is not forced through the nano-filtration membrane and has a resulting composition according to the membrane's MWCO, the size of the ions in solution, and other operating factors and membrane characteristics. The terms "Retentate" and "Concentrate" are used interchangeably.

DISCLOSURE OF THE INVENTION

In a first aspect, the present invention provides a process for removing organic contaminants from a Bayer process stream of a Bayer process, the process including passing the process stream through a nano-filtration membrane to form a retentate containing organic contaminants and a purified permeate.

Preferably, a portion of the retentate is purged from the Bayer process and/or subjected to further processing for recovery of chemical values therefrom, for example, in a wet oxidation or liquor burning unit. The whole of the retentate may be purged and/or further processed. However, a further portion of the retentate is preferably recycled as feed to the nano-filtration membrane. Preferably, the further portion is the balance of the retentate.

Preferably, the permeate is returned to the Bayer process.

In a second aspect, the present invention provides an apparatus for purifying a Bayer process stream containing organic impurities, the system including:

a filtration module housing a nano-filtration membrane having a feed side and a permeate side,
means for introducing the Bayer process stream as a feed stream to the feed side of the membrane at super atmospheric pressure,
means for removing a purified stream from the permeate side of the membrane, and
means for removing an impurity bearing retentate stream from the feed side of the membrane.

The process of the present invention is applicable to a variety of Bayer process streams, including seed wash liquor, lime-treated seed wash liquor, washer overflow liquor, spent plant liquor (including diluted with water or other low caustic liquor), liquor to digestion (including diluted with water or other low caustic liquor), pregnant liquor (including diluted with water or other low caustic liquor), or any other caustic aluminate liquors including a product stream of a liquor purification process. Any convenient arrangement or configuration of membranes may be employed including banks of membrane elements in series or parallel. However, for increased throughput at minimal capital costs, the available surface area of membrane within a membrane element is preferably maximised by spiral winding the membrane or the like.

The present invention offers improved performance of Bayer plants. For example, Bayer plants which purge organic containing streams such as spent liquor or seed wash solution or lime treated seed wash solution or washer liquor to balance organic contaminant input could utilise the present invention to recover alkali rich permeate for re-use in the process and purge a concentrated retentate stream rich in organic contaminants, thereby reducing alkali losses, reducing the volume of purged material, and improving the environmental aspects of the purge operations.

Advantageously, the present invention may be used as a precursor to other contaminant removal processes, such as liquor burning or wet oxidation or some other such organics removal process, with improved performance resulting from the concentration of contaminants achievable by the present invention.

EXAMPLES

Example 1 - Introductory Membrane Analysis

An indication of the caustic tolerance in a pure caustic solution of membranes (A)-(G) specified below in Table 1 was obtained by comparing the average water flux rate ($L/m^2/hr$) of the membranes in flat sheet configurations before and after a caustic immersion treatment. The caustic immersion treatment consisted of immersing each membrane in a (non-Bayer process stream) solution of free caustic (230 g/L sodium hydroxide expressed as $Na_2CO_3$) for 24 hours at 60°C. The average water flux rate ($L/m^2/hr$) was measured at constant pressure and temperature for a period of at least 30 minutes. A change of less than 25 % after the caustic immersion treatment as compared with the water flux rate prior to the caustic immersion treatment was considered to be indicative of the membrane having caustic tolerance. The results of the indicative testing are summarised in Table 1, together with a summary of whether each membrane met the aforementioned definition of a nano-filtration membrane based on the molecular weight cut-off (MWCO) range designated by the supplier of the membrane.

**Table 1**

| Membrane | Trade Name | Supplier | Indicative Caustic Tolerance | Nano-Filtration |
|---|---|---|---|---|
| (A) | GR90PP | Dow DDS | Yes | No |
| (B) | 7410 | Nitto Denko | No | Yes |
| (C) | 7450 | Nitto Denko | No | Yes |
| (D) | TFC | Fluid Systems | No | Yes |
| (E) | MPF 34 | Koch Membrane Systems | Yes | Yes |
| (F) | MPF 36 | Koch Membrane Systems | Yes | Yes |
| (G) | N30F | Hoescht | Yes | Yes |

Example 2 - Short term membrane performance

Membranes (A) and (E)-(G) having indicative caustic tolerance from Example 1 were analysed to assess their ability to remove organic contaminants from a Bayer process stream. Membranes (B)-(D) were not similarly analysed because of the indicative caustic tolerance results of Example 1.
Membranes were tested as flat sheets in a stirred cell set-up and/or in a cross-flow configuration. Under stirred conditions Bayer liquor to digestion ("L-D") was placed in a reservoir and allowed to equilibrate prior to sampling. The L-D had a nominal composition of 260 g/L caustic, 0.39 A/C, 0.80 C/S and 153 g/L free caustic.

About 50 ml of the L-D liquor was removed from the reservoir and placed in the stirred cell to ensure coverage of the membrane. This was performed to ensure that when pressure was applied no disturbance of the membrane occurred. Sampling of permeate was performed periodically. At the completion of the test the concentrate was also sampled.

Under crossflow conditions L-D liquor was placed in a feed tank. The feed tank was completely sealed to ensure that no evaporation took place. Sampling of the permeate and concentrate was performed periodically. The L-D liquor was maintained at 60°C by a water bath and recirculation was sufficient to maintain this temperature throughout the system.

Organic rejections *(% TOC Rejection)* were calculated in two ways. Under stirred conditions the rejections were calculated with respect to the organic concentration in the initial feed since sampling of the concentrate could not be performed. Equation 1 was used to perform the calculations.

$$\%TOC_{[feed]}Rejection=(1-TOC_{[permeate]}/TOC_{[feed]})*100 \ ----(Eq \ 1)$$

where $TOC_{[permeate]}$ = Organic concentration in the permeate $TOC_{[feed]}$ = Organic concentration in the initial feed

However, when testwork was undertaken under crossflow conditions the concentrate was also sampled and as a consequence organic rejections were also given with respect to the concentrate as shown in equation 2 below.

$$\%TOC_{[Conc]}Rejection=(1-TOC_{[permeate]}/TOC_{[Conc]})*100-------(Eq \ 2)$$

Where $TOC_{[conc]}$=Organic concentration in the concentrate at *the time of sampling.*

TOC rejections with respect to the concentrate were undertaken due to the fact that the concentration of organics in the initial feed solution was constantly changing. This was due to a number of reasons. Firstly, because the organics in the initial feed were being concentrated and since the concentrate was recycled back to the feed tank the organic concentration in the initial feed was thus increasing. Secondly, the concentration in the initial feed during diafiltration studies was constantly changing due to the addition of water, caustic or spent plant liquor to the feed tank.

Due to the above, the %TOC rejection in most of the crossflow studies were based on the concentration of organics in the concentrate at the time of sampling and not the initial feed concentration. However, for some tests the %TOC rejection was calculated with respect to both the initial feed and the concentrate.

The results of analysis of membrane (A) are set out below in Table 2.

**Table 2**

| Membrane | Flux (L/m$^2$.hr) | Pressure (kPa) | % Removal | | | Conditions |
|---|---|---|---|---|---|---|
| | | | TOC | A1203 | Caustic | |
| (A) | 60-12 | 900 | 0.2 | 0.1 | 0.1 | Stirred cell |

The results of analysis of membranes (E) and (F) are set out below in Table 3

**Table 3**

| Membrane | Flux (L/m$^2$.hr) | Pressure (kPa) | Time (hrs) | % Removal | | | Conditions |
|---|---|---|---|---|---|---|---|
| | | | | TOC | Al203 | Caustic | |
| E | 2-0.5 | 600 | 25 | 7.5(f) | 0 | 0 | Stirred |
| E | 1-0.4 | 1000 | 30 | 15(c) | 2 | 0 | Caustic diafiltration crossflow |

(continued)

| Membrane | Flux (L/m².hr) | Pressure (kPa) | Time (hrs) | % Removal | | | Conditions |
|---|---|---|---|---|---|---|---|
| | | | | TOC | Al203 | Caustic | |
| E | 2.5-1.5 | 1000 | 9 | 5(f) | 2 | 0 | Crossflow with PTGC pretreatment |
| E | 1.7-0.9 | 2500 | 5 | 10(f) | 5 | 0 | Crossflow |
| E | 3.5-3.0 | 2500 | 5 | 10(f) | 5 | 0 | Crossflow with PTGC pretreatment |
| F | 5-3 | 600 | 25 | 7.5(f) | 0 | 0 | Stirred |
| F | 8-5 | 1250 | 25 | 16(f) | 0 | 0 | Stirred |
| F | 7-2 | 1000 | 24 | 14(c) | 0 | 0 | Crossflow |
| F | * | 1000 | 24 | 14(c) | 0 | 0 | Crossflow and spacers |
| F | 25-20 | 2500 | 5 | 27(c) | 7 | 0 | Crossflow |
| F | 8-5 | 900 | 20 | 17(c) | 0 | 0 | Water diafiltration crossflow |
| F | 10-4 | 900 | 60 | 25(c) | 2 | 0 | Caustic diafiltration crossflow |
| F | 10-3 | 1000 | 50 125 | 20(c) 45(f) | 2(c) | 0 | Caustic diafiltration crossflow |
| F | 7-3 | 900 | 60 | 20(c) | 2 | 0 | Spent plant liquor diafiltration crossflow |
| F | 10-2 | 1000 | 270 8 | 26(c) 25(f) | 4.5(c) | 0 | Spent plant liquor diafiltration crossflow |

(f)= Calculated with respect to organics concentration in the initial feed, (c)= Calculated with respect to organic concentration in the concentrate at the time of sampling.

Membrane (G) was tested under crossflow conditions with Bayer plant liquor to digestion at a pressure of 1000 kPa. Organic rejections of 15% were achieved within 40 hours of operation and aluminium trihydrate rejections of 3-4% were achieved within 7 hours of operation and thereafter remained constant. No caustic was rejected during this test. The flux ranged from 4-1 L/m².hr.

Examples 1 and 2 indicated that:

(a) based on the indicative caustic tolerance testing, nano-filtration membranes (B), (C) and (D) were unlikely to be capable of removing organic contaminants from Bayer process streams;
(b) nano-filtration membranes (E), (F) and (G) successfully removed organic contaminants from Bayer process streams; and
(c) notwithstanding the indicative caustic tolerance testing, ultra-filtration membrane (A), which had a MWCO of 2000 Daltons as specified by the supplier, was incapable of removing organic contaminants from Bayer process streams.

Without wishing to be bound by theory, ultra-filtration membranes are believed to be too "loose" with respect to pore size to have any appreciable affect in removing organic contaminants from Bayer process streams.

Example 3 - Relative caustic durability and performance of nano-filtration membranes for low free caustic (5-50 g/L) streams

The commercially available or developmental nano-filtration (NF) membranes (as defined by supplier companies) listed in Table 4 below were subjected to more detailed investigation of relative caustic durability and performance over longer time periods.

**Table 4**

| Membrane | Trade Name | Supplier |
|----------|------------|----------|
| (E) | MPF 34 | Koch Membrane Systems |
| (F) | MPF 36 | Koch Membrane Systems |
| (G) | N30F | Nadir (formerly Hoescht) |
| (H) | P005F | Nadir (formerly Hoescht) |
| (I) | NF PES 10 | Nadir (formerly Hoescht) |
| (J) | NF-70 | Filmtec (Dow Chemical Group) |
| (K) | DK | Desal Inc / Osmonics |
| (L) | 7470 | Nitto Denko |

To assess the caustic durability of the membranes, each membrane was immersed in a pure caustic solution or caustic aluminate solution for various lengths of time at 60°C. After immersion, each of the membranes was then tested in a flat sheet membrane rig using equivalent free caustic strength liquor, with TOC rejection, flux rate and aluminate and soda rejections being plotted against time. The degree of change in flux rate and/or decrease in TOC, aluminate and soda rejections indicates the degree of degradation of the membrane during the period of immersion .

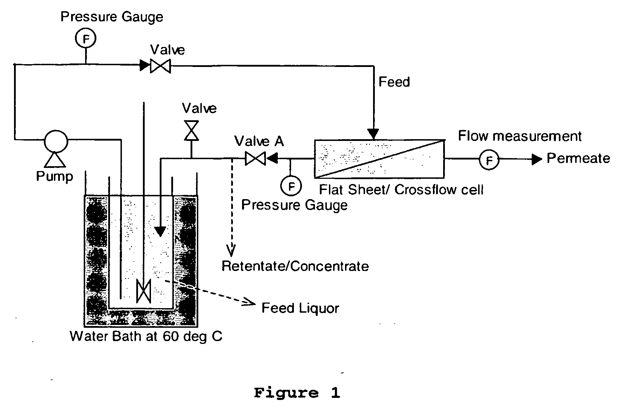

The testwork was undertaken under crossflow conditions with the retentate (concentrate) recycled back to the feed using the equipment schematically illustrated in Figure 1.

Organic rejections were calculated with respect to the concentrate in accordance with equation 2 set out in Example 2.

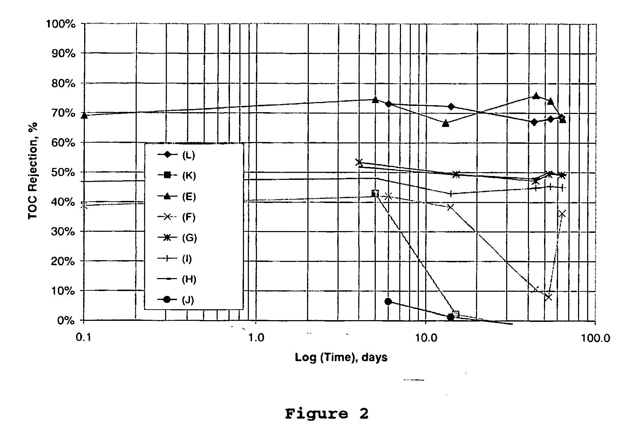

The initial test work involved immersion of membranes in 20g/L free caustic solution for over 2 months. The caustic durability and separation performance of the membranes were tested on an analogous low caustic plant stream, lime-treated seed wash liquor ("LSOF"), with the results set out in Figure 2. The test work demonstrated that six out of eight membranes were stable in 20g/L free caustic liquor for at least 9 weeks, although one of the six (membrane (F)) gave inconsistent results. Maximum TOC removal was 70-75% for membranes (E) and (L), combined with a high caustic recovery (ie nearly all caustic reporting to the permeate, as desired).

Membranes (J) and (K) were removed from further testing as they had demonstrated degradation and membranes (B) and (C) from Example 1 were included for further testing based on promise shown by membrane (L) from the same supplier (Nitto Denko).

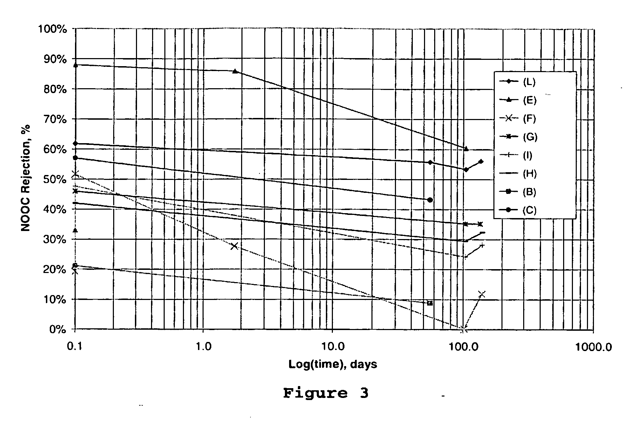

Follow-up test work with a seed wash stream ("B filtrate") showed only slight degradation for most membranes after 15-20 weeks in 20 g/L free caustic. These results are summarised in Figure 3. Six out of eight membranes still demonstrated good rejection (>25%) of NOOC which was used to differentiate the impact on sodium oxalate, which is at an unnaturally high level in seed wash, from all other organic carbon in solution. Maximum NOOC rejection was 88% for membrane (E). The two different initial ("zero" time) NOOC rejections for membrane (E) in Figure 3 indicate that membrane (E) may have deteriorated in the supplier's storage container prior to testing.

Overall fluxes varied quite significantly over the range of membranes, 15-600 L/m$^2$/hr for both LSOF and B filtrate feed streams. Storage in the caustic solutions usually increased these fluxes but only marginally. Those membranes with higher TOC or NOOC rejections generally had lower fluxes, indicating "tighter" porosity. Fluxes were usually slightly higher for LSOF compared with B filtrate.

Rejections of sodium carbonate for B-filtrate were variable, ranging from 5 to 46%. This is believed to also give a good indication of the relative "tightness" of the various nano-filtration membranes. For process viability lower soda rejection (or more soda permeating) is useful if the retentate is being purged, because the sodium carbonate in the permeate can be subsequently causticised for caustic recovery. The flexibility to tailor/select a membrane with respect to both TOC (or NOOC) and sodium carbonate rejections affords significant advantages when the present invention is coupled with downstream processing. All membranes had low to moderate alumina rejections, 6-27%, with lower values being preferred for process viability.

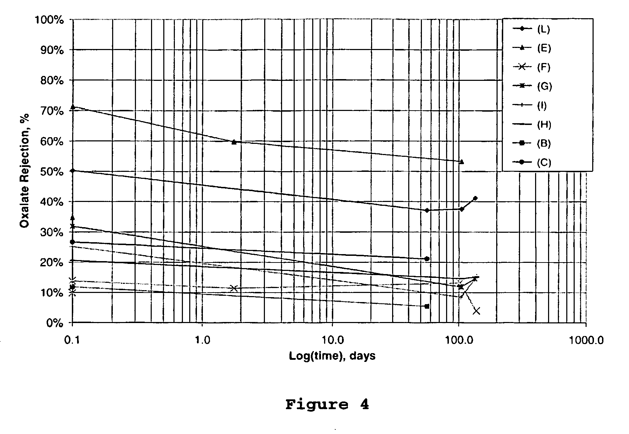

The results of oxalate rejection from B filtrate are summarised in Figure 4. The results were substantial for two membranes, 70% for membrane (E) and 50% for membrane (L). The other membranes had rejections of less than 30%. On storage in caustic solution, oxalate rejection decreased for all membranes.

The rejection of oxalate facilitates oxalate removal and destruction as well as recovery of soda. The benefit from the nano-filtration process of the present invention for organics removal or soda recovery may be enhanced by supplementing or replacing existing oxalate removal processes such as lime treatment or microbiological treatment of seed wash solution, or some other such oxalate removal process.

Example 4 - Relative caustic durability and performance of nano-filtration membranes for medium free caustic (50 - 100 g/L) streams

Medium free caustic streams in a Bayer plant would typically include first washer overflow liquor, pregnant liquor or pregnant liquor diluted with water or a low caustic Bayer solution, or spent liquor or liquor to digestion diluted with water or a low caustic Bayer solution, or any other such combination in this free caustic concentration range.

A caustic aluminate synthetic Bayer liquor of medium free caustic strength was used to store membranes prior to performance testing with diluted liquor-to-digestion (L-D). This storage liquor was deliberately made to be under-saturated in alumina at 60°C, using accordingly sodium hydroxide pellets, aluminium metal wire, sodium carbonate and sodium chloride. Liquor analysis gave a caustic of 99g/L, an A/C of 0.168 and a C/S of 0.875,such that free caustic was 82g/L.

For performance runs with diluted L-D as feed, L-D was diluted to 140g/L caustic using DI water. This gave a similar free caustic (-80g/L) to the caustic aluminate storage liquor used for durability testing.

Maximum TOC removal from the diluted L-D stream was 30% with fresh membranes ("zero" storage time).

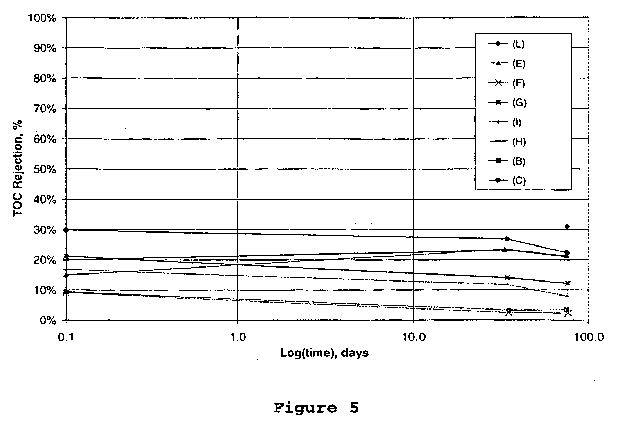

Storage in the medium free caustic aluminate solution slightly decreased performance of all membranes to give a marginal decrease in TOC rejection. Four of the eight membranes tested however had TOC rejections greater than 20% after 11 weeks of storage. These results are illustrated in Figure 5.

Fluxes were lower with diluted L-D than for the LSOF and B filtrate feed cases, ranging from 6-200 L/m$^2$ /hr. Storage in caustic aluminate solution increased these fluxes by 70-200% across the time period studied.

Rejections of sodium carbonate were variable, ranging from 0 to 16%, and is believed to give a good indication of the relative "tightness" of the nano-filtration membranes. Alumina rejections were also low (1-6%). That is, as desired, most soda and alumina permeate the membranes for recovery to the Bayer process.

Studies using pregnant liquor were undertaken using only membrane (F) with results summarised in Table 5 below. Pregnant liquor was heated and evaporated sufficiently to re-dissolve any precipitated gibbsite or other material and then re-diluted to original concentration (220 g/L caustic, 0.72 A/C, 55 g/L free caustic).

Under crossflow conditions 21% of organic matter was rejected within the first 3 hours of operation when no spacers were used in the membrane cell. In this experiment done in batch operation, some precipitation of gibbsite occurred during membrane filtration, with organic rejection decreasing, from 21% down to <5% after 20 hours operation. This is believed to be consistent with reverse osmosis behaviour. If particles of precipitate collect on the surface of the nano-filtration membrane, they have the effect of creating an unstirred boundary layer. As the concentration of retained solutes at the surface increase with time then rejection would decrease. The flux decreased in this test where gibbsite was precipitating and trended from 10 down to 2 L/m$^2$/hr.

Further testwork was performed with the incorporation of membrane spacers in order to cause turbulence at the surface of the membrane and thereby improve rejections and flux. This test was undertaken over 48 hours in 6 hour batches. These conditions allowed a longer run time at overall more stable organic rejections. The level of organic rejections also improved with the incorporation of spacers. An organic rejection of 25% was achieved within 23 hours of operation, and this decreased slightly as precipitation of the gibbsite occurred.

Testwork with pregnant liquor was also performed under stirred cell conditions, however, the flux was extremely low and during six hours of operation only enough permeate was collected for organic analysis. Even under these conditions a 21% organic rejection with respect to the initial feed was achieved prior to the precipitation of gibbsite.

**Table 5**

| Flux (L/m$^2$.hr) | Pressure (kPa) | Run Time (hrs) | % TOC Rejection | Conditions |
|---|---|---|---|---|
| -0.8 | 800 | 6 | 21 (f) | Stirred |
| 10 -> 2 | 1000 | 20 | 21 (c) | Crossflow |

(continued)

| Flux (L/m$^2$.hr) | Pressure (kPa) | Run Time (hrs) | % TOC Rejection | Conditions |
|---|---|---|---|---|
| 7 -> 4 | 1000 | 48 | 25 (c) | Crossflow with spacers |
| *(f) = Calculated with respect to organics concentration in the initial feed, (c) = Calculated with respect to organic concentration in the concentrate at the time of sampling.* | | | | |

This example demonstrates that pregnant liquor (liquor to precipitation) can be treated by nano-filtration membranes with similar organic removal as for diluted spent liquor or washer liquor and that it is desirable to minimise gibbsite auto-precipitation.

Example 5 - Relative caustic durability and performance of nano-filtration membranes for high free caustic (>100g/L) streams

High free caustic streams in a Bayer plant would typically include spent liquor or liquor to digestion, or any other liquor combination in this free caustic concentration range.

A caustic aluminate solution of 184 g/L free caustic was used to store membranes prior to performance testing with liquor to digestion ("L-D").

The storage solution was made under-saturated in alumina at 60°C using sodium hydroxide pellets, aluminium metal wire, sodium carbonate, and sodium chloride. Analysis of the liquor gave a caustic of 265g/L, an A/C of 0.295, and a C/S of 0.883; equivalent to a free caustic of 183.7g/L.

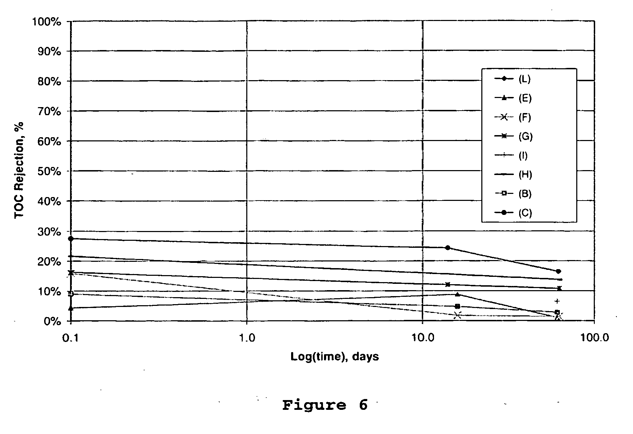

TOC rejections of <20% were achieved after 9 weeks of storage with the results illustrated in Figure 6.

Fluxes with fresh membranes and L-D feed liquor were low (1-46 L/m$^2$/hr). After storage in the caustic aluminate synthetic liquor, the fluxes increase to 6-151 L/m$^2$/hr.

Rejections of sodium carbonate were all low, ranging from 0 to 8%, and indicate again that as the ionic strength of feed increases, then generally rejections decrease, for example for both TOC and sodium carbonate. For process viability lower soda rejection (or more soda permeating) is useful if the retentate is being purged, because the sodium carbonate in the permeate can be subsequently causticised for caustic recovery. All membranes had low rejections for alumina, 1-7%.

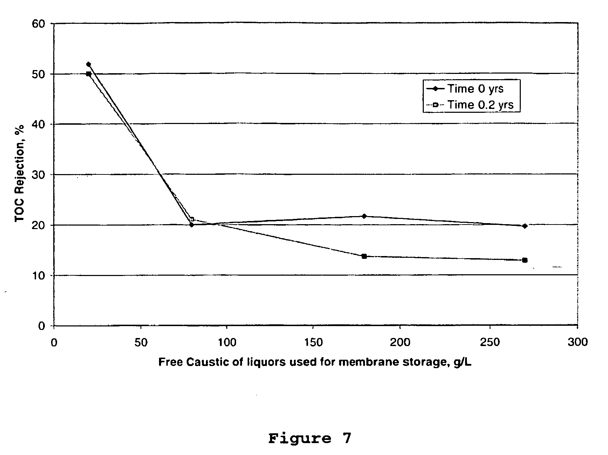

These_results indicate that free caustic in Bayer liquors is the main cause of degradation of membrane performance. This is illustrated graphically in Figure 7 which plots TOC rejection against free caustic for membrane (H) at zero and 0.2 years storage. The effect is marginal at low to medium free caustic. A similar trend is evident for flux versus free caustic, with the flux decreasing with increasing free caustic.

It is also evident that at lower caustic strength there is a much greater rejection of organics than there is at medium/high free caustic, that is more organics are passing through the membrane at higher caustic strength. This indicates that the membrane process of the present invention could be designed for selective application for desired TOC removal using a modification to free caustic/ionic strength of feed streams, and membranes formulated to different "tightnesses". There are also other levers available to one skilled in the membrane technology arts, such as pressure, temperature and crossflow velocity - optimisation of these variables are anticipated to improve rejection.

It is anticipated that membrane operation with commercial spiral wound or tubular elements will exhibit enhanced fluxes compared to those in the foregoing examples which utilised a flat sheet mode.

BRIEF DESCRIPTION OF DRAWINGS

Figures 1 - 7 of the accompanying drawings are referred to in the foregoing Examples. Figure 8 of the accompanying drawings is a schematic representation of a prior art Bayer process with purge. Preferred embodiments of the present invention are described, by way of example only, with reference to Figures 9 - 14 of the accompanying drawings, in which:

Figure 9     is a schematic representation of a Bayer process using the nano-filtration membrane organic removal process of the present invention in respect of lime treated seed wash, "LSOF" feed;

Figure 10     is a schematic representation of a Bayer process using the nano-filtration membrane organic removal process of the present invention in respect of seed wash feed;

Figure 11     is a schematic representation of a Bayer process using the nano-filtration membrane organic removal process of the present invention in respect of washer overflow, "WOF" feed;

Figure 12    is a schematic representation of_a Bayer process using the nano-filtration membrane organic removal process of the present invention in respect of spent liquor, "SL" feed;

Figure 13    is a schematic representation of a Bayer process using the nano-filtration membrane organic removal process of the present invention in respect of liquor to precipitation, "L-P" feed; and

Figure 14    is a schematic representation of a Bayer process using the nano-filtration membrane organic removal process of the present invention in respect of liquor to digestion, "L-D" feed feeding liquor purification.

DRAWING RELATED DESCRIPTION

In a typical Bayer process, controlling the organics concentration level in the main process liquors (pregnant liquor and spent liquor) must take into account the cyclical nature of the Bayer process. Organic carbon originates mainly from the incoming bauxite ore feed to digestion. A proportion of the bauxite organic carbon is extracted during digestion and degraded to be soluble in the process liquor, as sodium salts of organics including oxalate and as sodium carbonate. The degree of extractive degradation and dissolution may range from 50 to >90% depending on the type of bauxite and the temperature and other conditions of digestion.

Since the Bayer process is cyclical the organic contamination of the process liquor will keep increasing with each digestion cycle unless organic removal processes are practised. Further, control of liquor organics to a desired level in Bayer liquor requires design of organics removal processes of a sufficient scale and of an appropriate type to meet the required removal capacity, and the desired selectivity of organics removal for required plant productivity and operational efficiency.

The Bayer design engineer of usual experience can utilise established organic removal processes which balance the above factors based on specific knowledge of the bauxite, the particular Bayer flow sheet and those organics which have specific impacts on the process, viz oxalate seed poisons, hydrate active organics, etc as well as the bulk organic soda components.

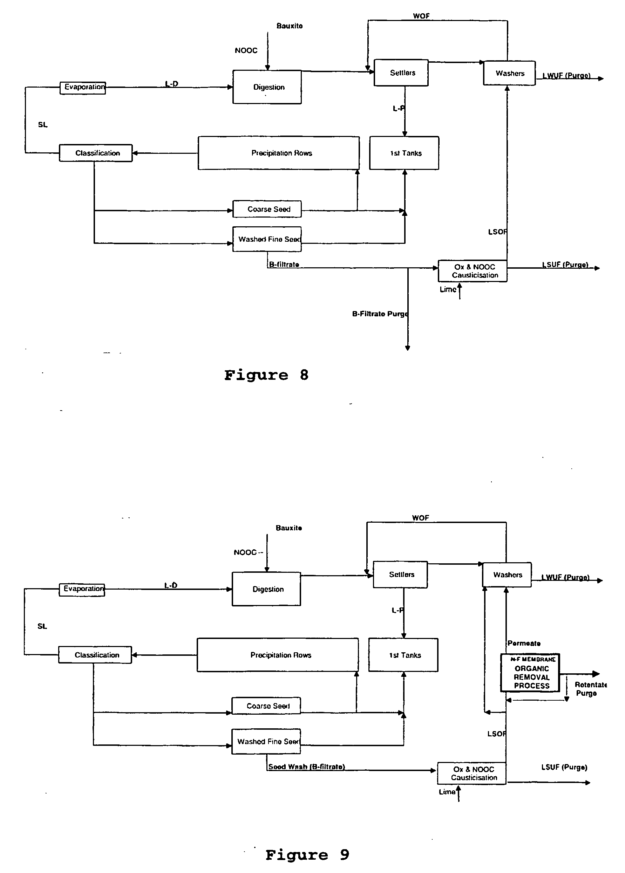

In any Bayer process some dilute soda solution and associated organic carbon will be inadvertent losses from the process, for example with last washer underflow solution entrained with red mud, and dilute liquor entrained with product hydrate to calcination (so called "leachable soda"). Nevertheless, to at least balance organic carbon input with the bauxite and moreover to keep liquor contamination to a manageable level with respect to productivity and operational efficiency, tailored organic removal processes must generally be implemented in Bayer plants, especially for bauxites with medium to high organic carbon levels. The simplest form of these is purge, as illustrated in Figure 8, where a dilute liquor stream is discarded generally to the red mud waste dam. This can be practised only if allowable by local environmental legislation. Such a practice is assisted by other processes such as using neutralisation by addition of sea-water to the waste slurry. Nevertheless, the cost of such a practice is in the loss of soda from the process, which must be made up with extra addition of caustic soda reactant.

In Figure 8, the notional Bayer refinery is balancing organics input mainly from bauxite by deliberate purging seed wash solution (termed "B-filtrate"). Another organics loss is via lime causticisation of seed wash solution where some of the Non Oxalate Organic Carbon ("NOOC") is removed as precipitated calcium salts and the entrained lime treated seed wash solution, herein referred to as lime settler underflow ("LSUF").

Operation of a nano-filtration membrane process of the present invention will now be described as a forerunner to a variety of applications of the present invention.

A dedicated feed tank of appropriate material is preferably arranged to off-take the desired flow-rate of fresh feed, and also any recirculating retentate flow if the system is run to a desired volume concentration factor. Preferably, the feed tank is cone shaped or some other design to allow operation to low volumes to achieve high volume concentration factors which will typically be the desired operation. The feed is maintained at any desired temperature for efficient separation (eg. 60°C), taking into account the pressure-temperature envelope for operation of the membrane. Temperature control is generally maintained by a suitable heat exchanger in the retentate return line or by a suitable contact or other heater in the feed tank itself.

Feed is preferably pumped via a suitable low pressure pump to a microfiltration pre-filter to remove any solids which may be present in the feed stream. A suitable microfiltration system would be a cartridge type filter removing down to 10 micron solid material, preferably a design with parallel filter lines, cartridges, isolation valves and drain and vent valves that allow cleaning and cartridge replacement while the process remains on-line.

The feed from the pre-filtration unit is preferably pumped via a suitable high pressure pump to a high pressure housing containing the nano-filtration membrane elements. The high pressure pump is preferably of a design to allow easy change of flow at constant pressure, for example, with a variable frequency drive or some other suitable control. The high pressure pump preferably allows modification and control of pressure up to at least 3000kPa. Actual pressure will depend on the pressure-temperature operational envelope for the membrane in question.

The nano-filtration membranes are preferably arranged as multiple 4 inch or 8 inch elements in series arrayed in parallel banks which enables a variety of capacity requirements to be met. The membranes can be tubular or spiral wound or some other suitable fabrication, although capital costs are generally minimised with spiral wound elements.

When arranged in cross-flow mode, the retentate or concentrate stream is generally recirculated to the feed tank to a desired volume concentration factor (VCF) while the permeate stream is recovered for subsequent use as a purified stream.

A simple application of a nano-filtration membrane process in the notional Bayer plant of Figure 8 is to purify the lime treated seed wash solution ("LSOF") since this is a low ionic strength, low free caustic and low aluminate solution which has some of the organic salts already removed by calcium complexation. This application is illustrated in Figure 9.

The process illustrated in Figure 9 runs at relatively high flux with high TOC rejection such that organic removal and soda recovery is sufficient for economic operation, notwithstanding the relatively high capacity needed to offset the dilute concentration of contaminants in the LSOF feed stream.

In the embodiment of Figure 9, the retentate from nano-filtration membrane treatment of LSOF would be purged to remove organics from the Bayer process, replacing the usual practice of purging seed wash solution ("B-filtrate") as illustrated in Figure 8, or operated at greater organics removal to purify Bayer process liquor and improve productivity. This is believed to be a more cost effective development since the purged stream from the membrane process has a higher NOOC/S ratio than seed wash solution. The permeate stream is forwarded to the washer circuit thereby decreasing the organics contribution of washer overflow (WOF) back into liquor to precipitation. The process can be operated with as much flexibility as the prior art process of Figure 8 with B-filtrate purge, by manipulating the feed flow to the unit, the membrane operating conditions for a given organics rejection / soda recovery and the VCF for a given retentate split. The lower level of oxalate purge with the embodiment of Figure 9 as compared with the prior art process of Figure 8 can be compensated by operating the oxalate causticisation unit at greater efficiency or throughput using well-known and practised knowledge in this art, or some other suitable process modification.

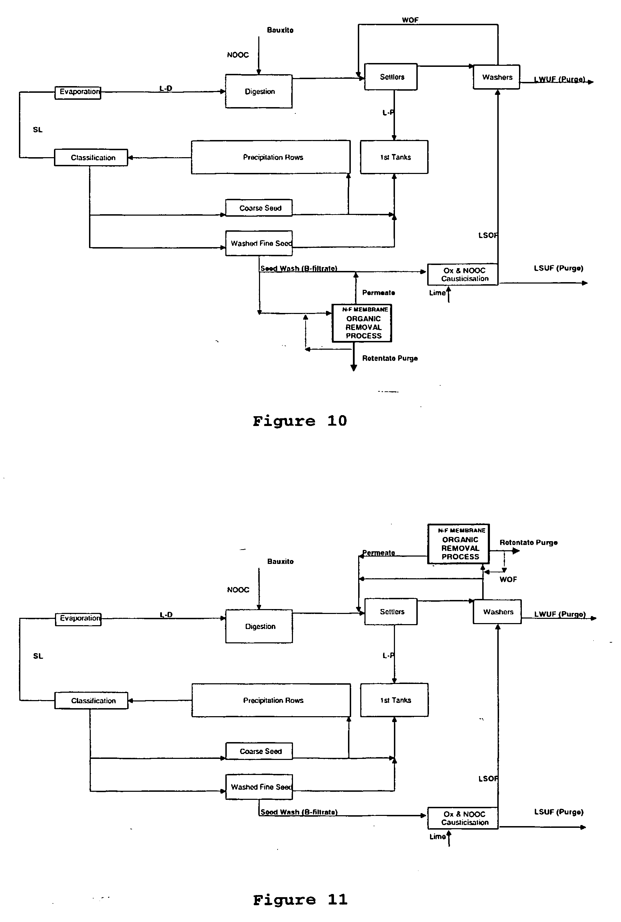

A further embodiment of the present invention is illustrated in Figure 10 which utilises a nano-filtration membrane process on seed wash liquor, with the added selectivity of soda recovery from organics and in some cases from sodium oxalate as well. The retentate stream is purged to waste at a lower soda loss than in the prior art process of Figure 8. The permeate is returned as feed to an oxalate and NOOC causticisation unit (or other organics processing unit) for removal of remaining oxalate or NOOC. For nano-filtration membranes showing high oxalate rejection, and / or for particular process designs and /or for certain Bayer plant requirements, the permeate may be directed straight to the LSOF stream (not shown in Figure 10), thereby freeing up capacity in the oxalate and NOOC causticisation unit. The embodiment of Figure 10 may also be operated at sufficient capacity organics removal to improve liquor purity and plant productivity.

A further embodiment of the present invention is illustrated in Figure 11 which utilises a nano-filtration membrane process to remove organics from washer overflow ("WOF") dilution liquor thereby reducing the organic contamination of liquor to precipitation. The permeate stream which has lowered organic contamination is used as dilution liquor to settler feed replacing some or all of WOF as dilution stream, and the retentate is purged for overall organics control. Such a process can be designed and operated conservatively to replace seed wash purge such that soda losses are decreased. Alternatively the nano-filtration membrane process can be designed and operated more aggressively so as to decrease the level of organic contamination in washer overflow and thereby in liquor to precipitation for increased yield and plant productivity.

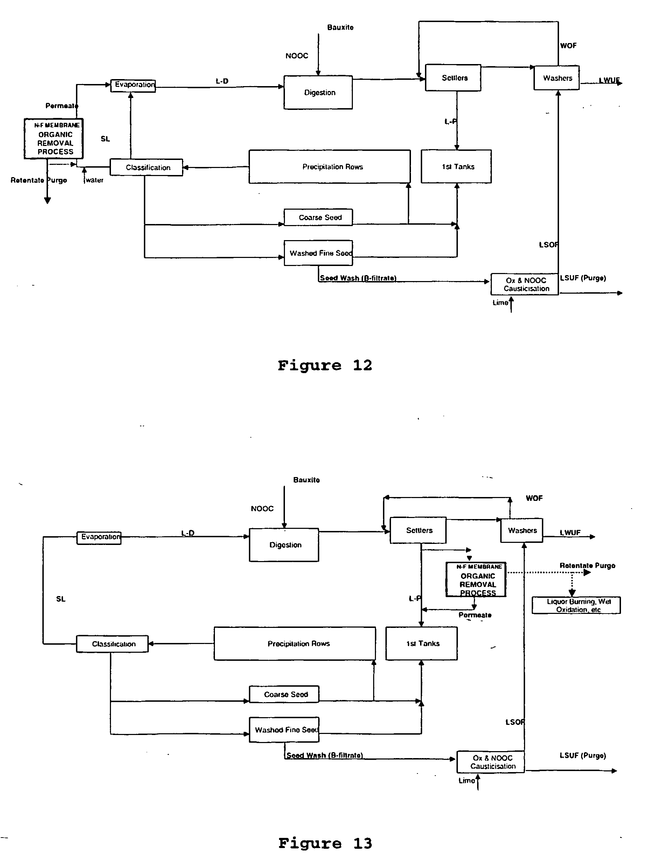

A further embodiment of the present invention is illustrated in Figure 12 in which a nano-filtration membrane processes spent liquor feed producing a retentate rich in organics but with lowered soda for purge or for further processing for more cost efficient organics removal. The permeate is sent to evaporation for ultimate return to digestion with lower organics contamination back into the next cycle of the Bayer process.

The embodiment of Figure 12 has the advantage of requiring a smaller scale nano-filtration membrane process unit and therefore lower capital cost, since the feed stream has higher organics contamination than in the previous embodiments. If operating cost is unduly impacted by membrane fouling or degradation at the higher free caustic level of this feed stream, then a diafiltration mode can be used whereby dilution water or some other suitable low caustic stream can be used for improved performance.

A further embodiment of the present invention is illustrated in Figure 13 in which a side-stream of liquor to precipitation is the feed stream to the nano-filtration membrane whereby the permeate stream having usual caustic aluminate concentration but depleted organic contaminants is returned to the precipitation process resulting in higher liquor productivity in the Bayer process. It is believed that the organics removed from this stream will be the higher molecular weight organics some of which are known to impact precipitation of gibbsite and / or sodium oxalate in the Bayer process. Additionally, it is believed that a reasonable proportion of the medium molecular weight organics will also be removed which are known from various studies to be prominent in reducing precipitation rate and sizing and impacting morphology of precipitating gibbsite.

The retentate from the embodiment of Figure 13 can be purged but the economics of doing so will depend very markedly on the degree of soda and aluminate rejection by the nano-filtration membrane. Alternatives to purging may be more economical including using the retentate as a feed stream to an existing organics removal process such as wet oxidation or liquor burning or some other suitable organics removal process, as already described in the literature or practised in the industry.

In applying the embodiment of Figure 13 it is desirable to consider the propensity for auto-precipitation of gibbsite or some other solid product during the nano-filtration membrane process. Various means are available to minimise or manage this issue including means to minimise holding time in the membrane elements, means to minimise degree and rate of change/stress in supersaturated solutions, means to control fluctuations in supersaturation during operation, means to minimise contact with surfaces to promote auto-precipitation, and the use of selective chemical additives (such as precipitation inhibitors, sometimes referred to as "precipitation poisons") to stabilise the supersaturated sodium aluminate liquor prior to contact with the nano-filtration membrane with the precipitation inhibitor chemical being essentially removed by the nano-filtration membrane prior to return to the main liquor to precipitation stream; all of which are well established design or operating principles or are known from general research literature.

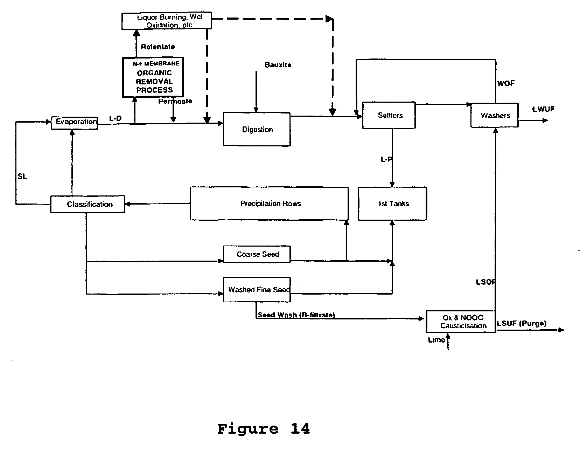

A further embodiment of the present invention is illustrated in Figure 14 which uses liquor to digestion ("L-D") (or some other liquor stream which is concentrated in organic contaminants) as the feed stream. The embodiment of Figure 14 has the advantage of requiring a smaller scale nano-filtration membrane process unit and therefore lower capital cost because the feed stream has higher organics contamination than in various previous embodiments. If operating cost is unduly impacted by membrane fouling or degradation at the higher free caustic of this feed stream, then a diafiltration mode can be used to improve performance.

Retentate produced by the embodiment of Figure 14 is desirably used as a feed stream to prior art organics removal process such as wet oxidation or liquor burning or some other suitable organics removal process.

Each of the embodiments described in relation to Figures 9-14 has been described in isolation of the other embodiments. It is to be clearly understood that the present invention includes a plurality of the embodiments being used in the same Bayer plant.

The nano-filtration membrane process of the present invention is preferably selected with a tailored degree of rejection of organics and other contaminants relative to rejections of the main liquor components such as sodium hydroxide, sodium aluminate, sodium carbonate, etc. In this way a combination process can be designed to give an overall optimum cost and efficiency of organics removal.

Prior art methodology for removing organics (including oxalate) that is deliberately used in Bayer plants may involve a combination of purging, for example of seed wash and accepting soda loss, causticisation of seed wash to recover soda and dispose of organics including oxalate as calcium salts, natural losses for example with washer underflow, wet oxidation of organics to sodium carbonate and sodium oxalate and causticising to recover soda, liquor burning whereby organic carbon is destroyed and soda returns as sodium aluminate. These prior art processes can suffer from high capital or high operating costs, including a loss of valuable soda reactant in the Bayer process. The present invention enables flexibility to be introduced to organics removal management with applicability over a range of caustic strengths found in Bayer plants and the option of using the present invention is combination with prior art methodology.

**Claims**

1. A process for removing organic contaminants from a Bayer process stream of a Bayer process, the process including passing the process stream through a nano-filtration membrane to form a retentate containing organic contaminants and a purified permeate.

2. A process as claimed in claim 1 wherein a portion of the retentate is purged from the Bayer process and/or subjected to further processing for recovery of chemical values therefrom and the permeate is returned to the Bayer process.

3. A process as claimed in claim 2 wherein the Bayer process stream is a lime treated seed wash solution, the portion of the retentate is purged, and the permeate is recycled to a washer circuit.

4. A process as claimed in claim 2 or claim 3 wherein the Bayer process stream is a seed wash liquor, the portion of the retentate is purged, and the permeate is fed to an oxalate removal process and/or is recycled to a washer circuit.

5. A process as claimed in claim 4 wherein the oxalate removal process is a causticisation process.

6. A process as claimed in any one of claims 2-5 wherein the Bayer process stream is a washer overflow dilution liquor, the portion of retentate is purged, and the permeate is recycled as a dilution liquor to a settler feed stream.

7. A process as claimed in any one of claims 2-6 wherein the Bayer process stream is a spent liquor, the portion of the retentate is purged and/or fed to a wet oxidation or liquor burning unit, and the permeate is fed to an evaporation unit prior to being recycled to a digestion unit.

8. A process as claimed in any one of claims 2-7 wherein the Bayer process stream is a liquor to precipitation stream, the portion of the retentate is purged and/or fed to a wet oxidation or liquor burning unit, and the permeate is recycled to a precipitation unit.

9. A process as claimed in any one of claims 2-8 wherein the Bayer process stream is a liquor to digestion stream, the portion of the retentate is fed to a wet oxidation or liquor burning unit, and the permeate is fed to a digestion unit.

10. A process as claimed in any one of claims 2-9 wherein the Bayer process stream is a product stream of a liquor purification process.

11. A process as claimed in any one of claims 2-10 wherein the balance of the retentate other than said portion is recycled as feed to the nano-filtration membrane.

12. A process as claimed in claim 2 wherein the Bayer process stream contains >5 g/L free caustic.

13. A process as claimed in claim 12 wherein the Bayer process stream contains >50 g/L free caustic.

14. A process as claimed in claim 12 wherein the Bayer process stream contains >100 g/L free caustic.

15. A process as claimed in claim 12 wherein the Bayer process stream contains less than 200 g/L free caustic.

16. A process as claimed in claim 15 wherein the nano-filtration membrane is permeable or semi-permeable to sodium hydroxide and sodium aluminate and semi-permeable or non-permeable to sodium salts of organics having a molecular weight in the range 70-300,000.

17. A process as claimed in claim 16 wherein the nano-filtration membrane is permeable or semi-permeable to sodium carbonate.

18. A process as claimed in claim 16 wherein the nano-filtration membrane is permeable or semi-permeable to sodium oxalate.

19. A process as claimed in claim 14 or claim 15 wherein the nano-filtration membrane is operated in a diafiltration mode.

20. An apparatus for purifying a Bayer process stream containing organic impurities, the system including:

a filtration module housing a nano-filtration membrane having a feed side and a permeate side,
means for introducing the Bayer process stream as a feed stream to the feed side of the membrane at super atmospheric pressure,
means for removing a purified stream from the permeate side of the membrane, and
means for removing an impurity bearing retentate stream from the feed side of the membrane.

21. An apparatus as claimed in claim 20 further including a microfiltration pre-filter upstream of the filtration module.

22. An apparatus as claimed in claim 20 or claim 21 further including means for recirculating the retentate stream to the feed stream.

23. An apparatus as claimed in any one of claims 20-22 further including means for diluting the feed stream and operating the filtration module in a diafiltration mode.

24. An apparatus as claimed in any one of claims 20-23 wherein there are a plurality of filtration modules arranged in series.

25. An apparatus as claimed in any one of claims 20-24 wherein there are a plurality of filtration modules arranged in parallel.

26. An apparatus as claimed in any one of claims 20-25 wherein the nano-filtration membrane(s) is configured other than as a flat sheet.

27. An apparatus as claimed in claim 26 wherein the nano-filtration membrane is a tubular or spiral wound membrane.

28. A process as claimed in any one of claims 1-19 which utilises an apparatus as claimed in any one of claims 20-27.

**Patentansprüche**

1. Verfahren zum Entfernen von organischen Verunreinigungen aus einem Bayerprozessstrom eines Bayerverfahrens, wobei das Verfahren das Führen des Prozessstroms durch eine Nanofiltrationsmembran umfasst, um ein Retentat, das organische Verunreinigungen enthält, und ein gereinigtes Permeat zu bilden.

2. Verfahren nach Anspruch 1, wobei ein Teil des Retentats aus dem Bayerverfahren gereinigt und/oder einer weiteren Bearbeitung zum Wiedergewinnen von chemischen Werten daraus unterzogen wird und das Permeat dem Bayerverfahren wieder zugeführt wird.

3. Verfahren nach Anspruch 2, wobei der Bayerprozessstrom eine mit Kalk behandelte Impfwaschlösung ist, der Teil des Retentats gereinigt wird und das Permeat in einen Wäscherkreislauf zurückgeführt wird.

4. Verfahren nach Anspruch 2 oder 3, wobei der Bayerprozessstrom eine Impfwaschlösung ist, der Teil des Retentats gereinigt wird und das Permeat einem Oxalat-Entfernprozess zugeführt und/oder in einen Wäscherkreislauf zurückgeführt wird.

5. Verfahren nach Anspruch 4, wobei der Oxalat-Entfernprozess ein Verätzungsprozess ist.

6. Verfahren nach einem der Ansprüche 2-5, wobei der Bayerprozessstrom eine Wäscherüberlaufverdünnungslösung ist, der Teil des Retentats gereinigt wird und das Permeat als Verdünnungslösung an einen Abscheiderzuflussstrom zurückgeführt wird.

7. Verfahren nach einem der Ansprüche 2-6, wobei der Bayerprozessstrom eine Ablauge ist, der Teil des Retentats gereinigt und/oder einer Nassoxidations- oder Lösungsverbrennungseinheit zugeführt wird und das Permeat einer Verdampfungseinheit zugeführt wird, bevor es an eine Aufschlusseinheit zurückgeführt wird.

8. Verfahren nach einem der Ansprüche 2-7, wobei der Bayerprozessstrom ein Strom Lösung zur Fällung ist, der Teil des Retentats gereinigt und/oder einer Nassoxidations- oder Lösungsverbrennungseinheit zugeführt wird und das Permeat an eine Fällungseinheit zurückgeführt wird.

9. Verfahren nach einem der Ansprüche 2-8, wobei der Bayerprozessstrom ein Strom Lösung zum Aufschluss ist, der Teil des Retentats einer Nassoxidations- oder Lösungsverbrennungseinheit zugeführt wird und das Permeat einer Aufschlusseinheit zugeführt wird.

10. Verfahren nach einem der Ansprüche 2-9, wobei der Bayerprozessstrom ein Produktstrom eines Lösungsreinigungsverfahrens ist.

11. Verfahren nach einem der Ansprüche 2-10, wobei der Rest des Retentats außer des genannten Teils als Speisung an die Nanofiltrationsmembran zurückgeführt wird.

12. Verfahren nach Anspruch 2, wobei der Bayerprozessstrom >5 g/L freies Alkali enthält.

13. Verfahren nach Anspruch 12, wobei der Bayerprozessstrom >50 g/L freies Alkali enthält.

14. Verfahren nach Anspruch 12, wobei der Bayerprozessstrom >100 g/L freies Alkali enthält.

15. Verfahren nach Anspruch 12, wobei der Bayerprozessstrom weniger als 200 g/L freies Alkali enthält.

16. Verfahren nach Anspruch 15, wobei die Nanofiltrationsmembran für Natriumhydroxid und Natriumaluminat durchlässig oder halbdurchlässig und für Natriumsalze von organischen Verbindungen mit einem Molekulargewicht im Bereich von 70-300.000 halbdurchlässig oder nichtdurchlässig ist.

17. Verfahren nach Anspruch 16, wobei die Nanofiltrationsmembran für Natriumcarbonat durchlässig oder halbdurchlässig ist.

18. Verfahren nach Anspruch 16, wobei die Nanofiltrationsmembran für Natriumoxalat durchlässig oder halbdurchlässig ist.

19. Verfahren nach Anspruch 14 oder 15, wobei die Nanofiltrationsmembran in einem Diafiltrationsmodus betrieben wird.

20. Vorrichtung zum Reinigen eines Bayerprozessstroms enthaltend organische Verunreinigungen, wobei das System umfasst:

ein Filtrationsmodul, in dem eine Nanofiltrationsmembran mit einer Zuflussseite und einer Permeatseite angeordnet ist,
Mittel zum Einbringen des Bayerprozessstroms als Zuflussstrom in die Zuflussseite der Membran bei Atmosphärenüberdruck,
Mittel zum Entfernen eines gereinigten Stroms von der Permeatseite der Membran und
Mittel zum Entfernen eines verunreinigungstragenden Retentatstroms von der Zuflussseite der Membran.

21. Vorrichtung nach Anspruch 20, weiterhin umfassend einen Mikrofiltrations-Vorfilter, der dem Filtrationsmodul vorgeschaltet ist.

22. Vorrichtung nach Anspruch 20 oder 21, weiterhin umfassend Mittel zum Rezirkulieren des Retentatstroms an den Zuflussstrom.

23. Vorrichtung nach einem der Ansprüche 20-22, weiterhin umfassend Mittel zum Verdünnen des Zuflussstroms und Betreiben des Filtrationsmoduls in einem Diafiltrationsmodus.

24. Vorrichtung nach einem der Ansprüche 20-23, wobei eine Mehrzahl Filtrationsmodule in Reihe angeordnet sind.

25. Vorrichtung nach einem der Ansprüche 20-24, wobei eine Mehrzahl Filtrationsmodule parallel angeordnet sind.

26. Vorrichtung nach einem der Ansprüche 20-25, wobei die Nanofiltrationsmembran(en) anders als als flache Bahn konfiguriert ist.

27. Vorrichtung nach Anspruch 26, wobei die Nanofiltrationsmembran eine rohrförmige oder spiralgewickelte Membran ist.

28. Verfahren nach einem der Ansprüche 1-19, das eine Vorrichtung nach einem der Ansprüche 20-27 verwendet.


**Revendications**

1. Procédé pour retirer des contaminants organiques d'un flux de procédé Bayer d'un procédé Bayer, le procédé comprenant le passage du flux de procédé à travers une membrane de nano-filtration pour former un rétentat contenant des contaminants organiques et un perméat purifié.

2. Procédé selon la revendication 1 **caractérisé en ce qu'**une portion du rétentat est purgée à partir du procédé Bayer et/ou soumis à un traitement ultérieur pour rétablir des valeurs chimiques et le perméat est renvoyé dans le procédé Bayer.

3. Procédé selon la revendication 2 **caractérisé en ce que** le flux de procédé Bayer est une solution de lavage de grains traitée à la chaux, la portion du rétentat est purgée, et le perméat est recyclé dans un circuit de lavage.

4. Procédé selon l'une des revendications 2 ou 3 **caractérisé** le flux de procédé Bayer est une liqueur de lavage de grains, la portion du rétentat est purgée et le perméat est conduit vers un procédé d'élimination d'oxalate et/ou est recyclé dans un circuit de lavage.

**5.** Procédé selon la revendication 4 **caractérisé en ce que** le procédé d'élimination d'oxalate est un procédé de causticisation.

**6.** Procédé selon l'une des revendications 2 à 5 **caractérisé en ce que** le flux de procédé Bayer est une liqueur de dilution de surverse de lavage, la portion du rétentat est purgée, et le perméat est recyclé en tant que liqueur de dilution dans un flux d'alimentation de cuve de décantation.

**7.** Procédé selon l'une quelconque des revendications 2 à 6 **caractérisé en ce que** le f lux de procédé Bayer est une liqueur résiduaire, la portion du rétentat est purgée et/ou conduite vers à une unité d'oxydation humide ou de brûlage de liqueur, et le perméat est conduit vers une unité d'évaporation avant d'être recyclé dans une unité de digestion.

**8.** Procédé selon l'une quelconque des revendications 2 à 7 **caractérisé en ce que** le flux de procédé Bayer est une liqueur pour flux à précipitation, la portion du rétentat est purgée et/ou conduite vers une unité d'oxydation humide ou de brûlage de liqueur, et le perméat est recyclé dans une unité de précipitation.

**9.** Procédé selon l'une quelconque des revendications 2 à 8 **caractérisé en ce que** le flux de procédé Bayer est une liqueur de flux à digestion, la portion du rétentat est conduite vers une unité d'oxydation humide ou de brûlage de liqueur, et le perméat est conduit vers une unité de digestion.

**10.** Procédé selon l'une quelconque des revendications 2 à 9 **caractérisé en ce que** le flux de procédé Bayer est un flux de produit d'un procédé de purification de liqueur.

**11.** Procédé selon l'une quelconque des revendications 2 à 10 **caractérisé en ce que** le reste du rétentat autre que ladite portion est recyclé en tant qu'alimentation d'une membrane de nano-filtration.

**12.** Procédé selon la revendication 2 **caractérisé en ce que** le flux de procédé Bayer contient plus de 5g/L de caustique libre.

**13.** Procédé selon la revendication 12 **caractérisé en ce que** le flux de procédé Bayer contient plus de 50g/L de caustique libre.

**14.** Procédé selon la revendication 12 **caractérisé en ce que** le procédé Bayer contient plus de 100g/L de caustique libre.

**15.** Procédé selon la revendication 12 **caractérisé en ce que** le procédé Bayer contient plus de 200g/L de caustique libre.

**16.** Procédé selon la revendication 15 **caractérisé en ce que** la membrane de nano-filtration est perméable ou semi-perméable à l'hydroxyde de sodium et à l'aluminate de sodium et semi-perméable ou imperméable aux sels de sodium de produits organiques ayant un poids moléculaire compris entre 70 et 300 000.

**17.** Procédé selon la revendication 16 **caractérisé en ce que** la membrane de nano-filtration est perméable ou semi-perméable au carbonate de sodium.

**18.** Procédé selon la revendication 16 **caractérisé en ce que** la membrane de nano-filtration est perméable ou semi-perméable à l'oxalate de sodium.

**19.** Procédé selon l'une des revendications 14 ou 15 **caractérisé en ce que** la membrane de nano-filtration fonctionne en mode diatiltrntion.

**20.** Dispositif pour purifier un flux de procédé Bayer contenant des impuretés organiques, le système comprenant :

    - un module de filtration supportant une membrane de nano-filtration avec une face d'alimentation et une face de perméation,
    - des moyens pour introduire le flux de procédé Bayer en tant que flux d'alimentation de la face d'alimentation de la membrane, à une pression supérieure à la pression atmosphérique,
    - des moyens pour retirer un flux purifié de la face de perméation de la membrane, et
    - des moyens pour retirer un flux de rétention portant des impuretés de la face d'alimentation de la membrane.

**21.** Dispositif selon la revendication 20 comprenant également un pré filtre de microfiltration en amont du module de filtration.

**22.** Dispositif selon l'une des revendications 20 ou 21 incluant également des moyens de remise en circulation du flux de rétention dans le flux d'alimentation.

**23.** Dispositif selon l'une des revendications 20 à 22 comprenant également des moyens pour diluer le flux d'alimentation et faisant fonctionner le module de filtration en mode diafiltration.

**24.** Dispositif selon l'une des revendications 20 à 23 **caractérisée en ce que** plusieurs modules de filtration sont disposés en série.

**25.** Dispositif selon l'une des revendications 20 à 24 **caractérisé en ce que** plusieurs modules de filtration sont disposés en parallèle.

**26.** Dispositif selon l'une des revendications 20 à 25 **caractérisé en ce que** la ou les membranes de nano-filtration sont configurées autrement qu'en plaque plane.

**27.** Dispositif selon la revendication 26 **caractérisé en ce que** la membrane de nano-filtration est une membrane enroulée tubulaire ou en spirale.

**28.** Procédé selon l'une des revendications 1 à 19 **caractérisé en ce qu'**il utilise un dispositif tel que revendiqué selon l'une des revendications 20 à 27.

**Figure 1**

Figure 2

Figure 3

Figure 4

Figure 5

**Figure 6**

**Figure 7**

Figure 8

Figure 9

**Figure 10**

**Figure 11**

**Figure 12**

**Figure 13**

**Figure 14**